# EUROPEAN PATENT APPLICATION

(11) **EP 4 557 492 A1**
(43) Date of publication of application: **21.05.2025**
(21) Application number: 23839493.6
(22) Date of filing: 30.06.2023
(51) Int. Cl.: H01M 50/50, H01M 50/548, H01M 50/557

(54) **BATTERY MODULE AND METHOD FOR PRODUCING BATTERY MODULE**

(30) Priority: 12.07.2022 JP 2022111633
(71) Applicant: AESC Japan Ltd., Kanagawa, 2520012 (JP)
(72) Inventor: SEKINO, Keizo, Zama-shi, Kanagawa 252-0012 (JP); IWAMOTO, Jun, Zama-shi, Kanagawa 252-0012 (JP); FURUKAWA, Yuki, Zama-shi, Kanagawa 252-0012 (JP); IRAGO, Yoshikazu, Zama-shi, Kanagawa 252-0012 (JP)
(74) Representative: Mathys & Squire
(86) International application number: PCT/JP2023/024441
(87) International publication number: WO 2024/014321

(57) **Abstract**

A battery module (50) includes: a plurality of battery cells (100) stacked in a predetermined direction; and a plurality of lead portions (110) each folded back between at least one battery cell (100) and at least another battery cell (100), wherein an average of tilts of end surfaces of the plurality of lead portions (110) relative to a direction perpendicular to the predetermined direction is equal to or greater than 85.0° and equal to or less than 95.0°.

## Description

### TECHNICAL FIELD

The present invention relates to a battery module and a method of manufacturing a battery module.

### BACKGROUND ART

A battery module such as a lithium-ion secondary battery includes a plurality of stacked battery cells. For example, as described in Patent Document 1, in some battery modules, a plurality of battery cells connected in parallel and a plurality of other battery cells connected in parallel may be connected by a lead portion in series. In the battery module, the lead portion is folded back between the plurality of battery cells and the plurality of other battery cells.

### RELATED DOCUMENT

### PATENT DOCUMENT

Patent Document 1: International Patent Publication No. WO2006/109610

### SUMMARY OF THE INVENTION

### TECHNICAL PROBLEM

For example, as described in Patent Document 1, at least one battery cell and at least another battery cell may be connected by a lead portion in series. In this case, the lead portion is folded by a single folding, and the lead portion may be folded back between the at least one battery cell and the at least another battery cell. The single folding to fold the lead portion, however, may result in relatively low accuracy and precision of the folded shape of the lead portion.

One example of an object of the present invention is to grant high accuracy and precision of the folded shape of the lead portion. Another object of the present invention may be apparent from description of the present specification.

### SOLUTION TO PROBLEM

One aspect according to the present invention is as described below.
[1] A battery module including:
   a plurality of battery cells stacked in a predetermined direction; and
   a plurality of lead portions each folded back between at least one battery cell and at least another battery cell, wherein
   an average of tilts of end surfaces of the plurality of lead portions relative to a direction perpendicular to the predetermined direction is equal to or greater than 85.0° and equal to or less than 95.0°.
[2] A battery module including:
   a plurality of battery cells stacked in a predetermined direction; and
   a plurality of lead portions each folded back between at least one battery cell and at least another battery cell, wherein
   a standard deviation of positional displacements of end surfaces of the plurality of lead portions in a direction perpendicular to the predetermined direction is equal to greater than 0 and equal to or less than 2.50 mm.
[3] A method of manufacturing a battery module including:
   folding a part of a lead portion connecting at least one battery cell and at least another battery cell; and
   folding another part of the lead portion after folding the part of the lead portion.
[4] The method of manufacturing a battery module according to [3], wherein
   the folding the part of the lead portion includes folding the part of the lead portion at a folding angle greater than a folding angle of the part of the lead portion after folding the another part of the lead portion.

### ADVANTAGEOUS EFFECTS OF INVENTION

According to the above-described aspect of the present invention, high accuracy and precision of the folded shape of the lead portion can be granted.

### BRIEF DESCRIPTION OF THE DRAWINGS

[Fig. 1] A perspective view of a battery module according to an embodiment viewed from the front side.
[Fig. 2] A diagram with an accommodation body removed from Fig. **1****.**
[Fig. 3] A perspective view of a cell stack according to the embodiment viewed from the front side.
[Fig. 4] A top view of a part of the battery module according to the embodiment.
[Fig. 5] A diagram illustrating a method of manufacturing the cell stack according to the embodiment.
[Fig. 6] A diagram illustrating a method of manufacturing the cell stack according to the embodiment.
[Fig. 7] A diagram illustrating a method of manufacturing the cell stack according to the embodiment.
[Fig. 8] A diagram illustrating details of a method of folding a lead portion.
[Fig. 9] A diagram illustrating details of a method of folding the lead portion.

### DESCRIPTION OF EMBODIMENTS

Hereinafter, an embodiment according to the present invention is described by using the accompanying drawings. In all drawings, a similar component is assigned with a similar reference sign, and description is omitted as appropriate.

In the present specification, an ordinal number such as "first", "second", and "third" is assigned, unless otherwise specified, merely discriminates a configuration assigned with a similar name; therefore, a specific feature (e.g., order or a degree of importance) of the configuration is not indicated.

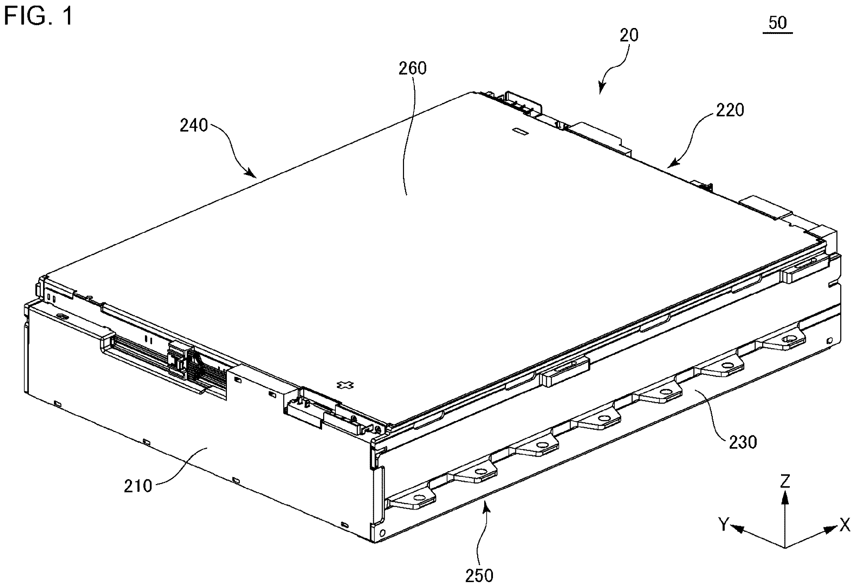

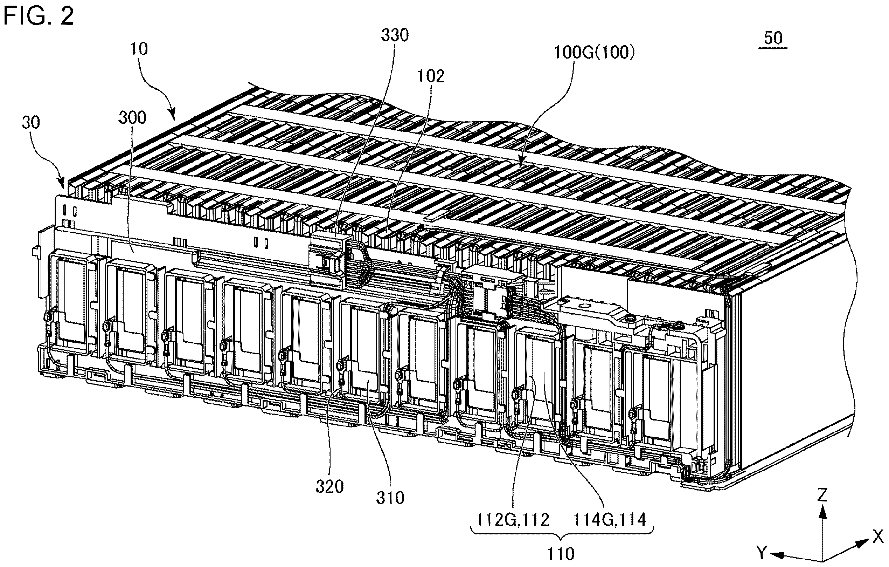

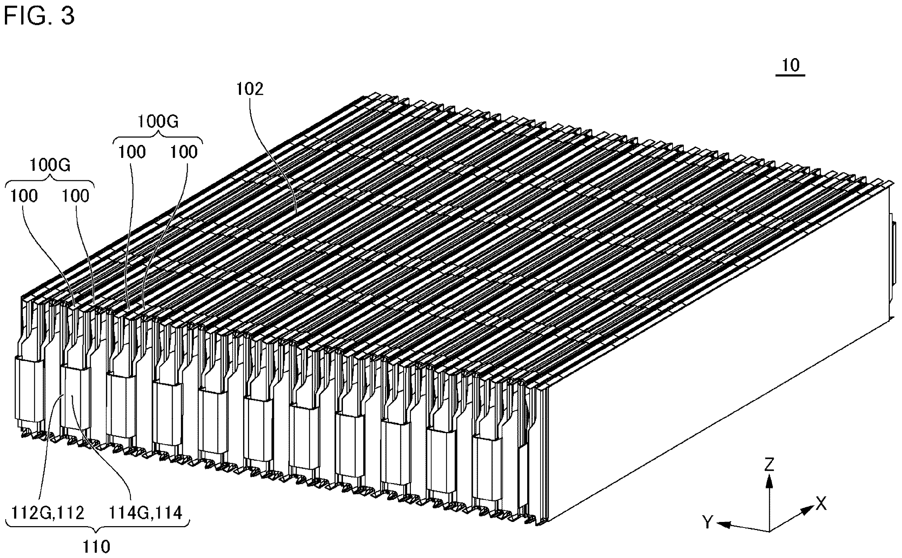

Fig. 1 is a perspective view of a battery module 50 according to the embodiment viewed from the front side. Fig. 2 is a view with an accommodation body 20 removed from Fig. 1. Fig. 3 is a perspective view of a cell stack 10 according to the embodiment viewed from the front side.

In Figs. 1 to 3, an arrow indicating a first direction X, a second direction Y, and a third direction Z each indicates that a direction headed from a base end of the arrow to a leading end is a positive direction of a direction indicated by the arrow, and a direction headed from a leading end of the arrow to a base end is a negative direction of a direction indicated by the arrow. The first direction X indicates one direction parallel to a horizontal direction perpendicular to a vertical direction. Specifically, the first direction X indicates a front-rear direction of the battery module 50. The positive direction of the first direction X is a direction headed from the front side to the rear side of the battery module 50. The negative direction of the first direction X is a direction headed from the rear side to the front side of the battery module 50. The second direction Y indicates a direction perpendicular to the vertical direction and the first direction X. The second direction Y indicates a left-right direction of the battery module 50. The positive direction of the second direction Y is a direction headed from right to left of the battery module 50 viewed from the front side of the battery module 50. The negative direction of the second direction Y is a direction headed from left to right of the cell stack 10 viewed from the front side of the battery module 50. The third direction Z indicates a direction parallel to the vertical direction. The positive direction of the third direction Z is a direction headed from the lower side to the upper side of the battery module 50. The negative direction of the third direction Z is a direction headed from the upper side to the lower side of the battery module 50.

The relation among the first direction X, the second direction Y, the third direction Z, the vertical direction, and the horizontal direction is not limited to the above example. The cell stack 10 may be disposed such that the first direction X or the second direction Y is parallel to the vertical direction, for example.

Hereinafter, unless otherwise specified, "right" and "left" indicate right and left as viewed form the front side of the battery module 50 respectively.

In the present embodiment, the battery module 50 is mounted on a moving body such as an automobile. However, use of the battery module 50 is not limited to this example.

The battery module 50 includes the cell stack 10, the accommodation body 20, and a voltage detection device 30. The battery module 50 may further include a voltage detection device, not illustrated, disposed on the rear side of the cell stack 10. The voltage detection device provided on the rear side of the cell stack 10 may include, for example, a configuration similar to the voltage detection device 30 illustrated in Fig. 2.

By using Fig. 3, the cell stack 10 is described.

The cell stack 10 includes a plurality of cell groups 100G. Non-limiting examples of numbers of cell groups 100G included in the cell stack 10 include equal to or greater than 2 and equal to or less than 30. Each cell group 100G includes a plurality of battery cells 100. Each battery cell 100 includes an exterior member 102, a positive electrode lead 112, and a negative electrode lead 114.

The exterior member 102 accommodates a battery element, not illustrated, together with an electrolytic liquid, not illustrated. In one example, the battery element includes a positive electrode, a negative electrode, and a separator, not illustrated, stacked in the second direction Y in the exterior member 102.

The positive electrode lead 112 is drawn out from one of the front end and the rear end of the exterior member 102. The positive electrode lead 112 is electrically connected to the positive electrode in the exterior member 102. In one example, the positive electrode lead 112 is formed of metal such as aluminum. Non-limiting examples of lengths of a portion of the positive electrode lead 112 drawn out from the exterior member 102 include equal to or greater than 3 cm and equal to or less than 9 cm. Non-limiting examples of widths of the leading end of the portion of the positive electrode lead 112 drawn out from the exterior member 102 include equal to or greater than 3 cm and equal to or less than 9 cm. Non-limiting examples of thicknesses of the portion of the positive electrode lead 112 drawn out from the exterior member 102 include equal to or greater than 0.4 mm and equal to or less than 0.6 mm.

The negative electrode lead 114 is drawn out from another one of the front end and the rear end of the exterior member 102. The negative electrode lead 114 is electrically connected to the negative electrode in the exterior member 102. In one example, the negative electrode lead 114 is formed of metal different from the metal configuring the positive electrode lead 112, such as copper. Non-limiting examples of lengths of the portion of the negative electrode lead 114 drawn out from the exterior member 102 include equal to or greater than 3 cm and equal to or less than 9 cm. Non-limiting examples of widths of the leading end of the portion of the positive electrode lead 114 drawn out from the exterior member 102 include equal to or greater than 3 cm and equal to or less than 4.5 cm. Non-limiting examples of thicknesses of the portion of the negative electrode lead 114 drawn out from the exterior member 102 include equal to or greater than 0.2 mm and equal to or less than 0.4 mm.

In the embodiment, the battery cell 100 includes a long direction in the first direction X and includes a short direction in the third direction Z. However, the length of the battery cell 100 in the first direction X and the width of the battery cell 100 in the third direction Z may be equal. Alternatively, the battery cell 100 may include a long direction in the third direction Z and include a short direction in the first direction X. Non-limiting examples of widths of the battery cell 100 in the third direction Z include equal to or greater than 8 cm and equal to or less than 15 cm. Non-limiting examples of thicknesses of the battery cell 100 in the second direction Y include equal to or greater than 0.7 cm and equal to or less than 1.6 cm.

In each cell group 100G, a plurality of positive electrode leads 112 included in each cell group 100G is connected to each other and a plurality of negative electrode leads 114 included in each cell group 100G is connected to each other. In each cell group 100G, accordingly, a plurality of battery cells 100 included in each cell group 100G is connected in parallel. In the embodiment, each cell group 100G includes two battery cells 100. However, the number of battery cells 100 included in each cell group 100G may be three or more. Alternatively, the number of battery cells 100 included in each cell group 100G may be only one. In other words, the cell group 100 may be a battery cell 100.

Hereinafter, a plurality of positive electrode leads 112 included in each cell group 100G are referred to as a positive electrode lead group 112G, as necessary. A plurality of negative electrode leads 114 included in each cell group 100G are referred to as a negative electrode lead group 114G, as necessary.

A plurality of cell groups 100G is connected by a plurality of lead portions 110 in series.

Each lead portion 110 includes a positive electrode lead group 112G of one of cell groups 100G adjacent to each other in the second direction Y and a negative electrode lead group 114G of another one of the cell groups 100G adjacent to each other in the second direction Y. The positive electrode lead group 112G and the negative electrode lead group 114G are joined to each other by a joining method such as laser welding, ultrasonic joining, resistance welding, and adhesion. Among these joining methods, the laser welding is preferable in light of high reliability in joining and reduction of the number of components when a material of the positive electrode lead 112 and a material of the negative electrode lead 114 are different from each other.

In the cell stack 10, a cell group 100G with the positive electrode lead group 112G positioned on the front side and the negative electrode lead group 114G positioned on the rear side and a cell group 100G with the positive electrode lead group 112G positioned on the rear side and the negative electrode lead group 114G positioned on the front side are alternately stacked. Each lead portion 110 is folded back between cell groups 100G adjacent to each other in the second direction Y. Thus, a plurality of lead portions 110 is arranged in the second direction Y on the front side of the cell stack 10. A plurality of lead portions 110 is arranged in the second direction Y also on the rear side of the cell stack 10. A plurality of lead portions 110 arranged in the second direction Y on the front side of the cell stack 10 and a plurality of lead portions 110 arranged in the second direction Y on the rear side of the cell stack 10 are alternately arranged in the second direction Y.

By using Figs. 1 and 2, the accommodation body 20 is described.

The accommodation body 20 accommodates the cell stack 10 and the voltage detection device 30. The accommodation body 20 includes a first cover member 210, a second cover member 220, a third cover member 230, a fourth cover member 240, a fifth cover member 250, and a sixth cover member 260.

The first cover member 210 covers the front side of the cell stack 10 and the voltage detection device 30. The second cover member 220 covers the rear side of the cell stack 10. When a voltage detection device, not illustrated, is provided on the rear side of the cell stack 10, the second cover member 220 may cover the voltage detection device. The third cover member 230 covers the right side of the cell stack 10. The fourth cover member 240 covers the left side of the cell stack 10. The fifth cover member 250 covers the lower side of the cell stack 10. The sixth cover member 260 covers the upper side of the cell stack 10. The third cover member 230 and the fourth cover member 240 are parallel to the first direction X.

By using Fig. 2, the voltage detection device 30 is described.

The voltage detection device 30 includes a holding body 300, a plurality of voltage detection portions 310, a plurality of voltage detection lines 320, and a connector 330.

The holding body 300 is provided on the front side of the cell stack 10. The holding body 300 is attached to the accommodation body 20 via mechanical joining such as a snap fit and a screw.

Each of the plurality of voltage detection portions 310 is held by the holding body 300. Each of the plurality of voltage detection portions 310 is connected to each of a plurality of lead portions 110 on the front side of the cell stack 10.

Each of the plurality of voltage detection lines 320 electrically connects each of the plurality of voltage detection portions 310 to the connector 330. In the embodiment, the connector 330 is provided in the upper portion of the holding body 300. However, the position of the voltage detection portions 310, routing of the voltage detection line 320, and the position of the connector 330 are not limited to the example according to the embodiment.

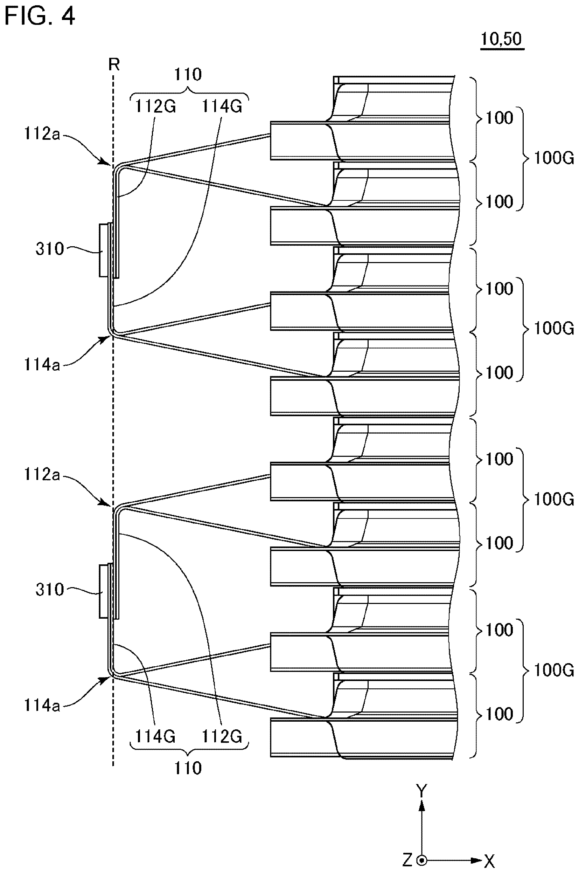

Fig. 4 is a top view of a part of the battery module 50 according to the embodiment.

A white circle with a black dot indicating the third direction Z in Fig. 4 indicates that a direction headed from back to front of a surface of paper is a positive direction of the third direction Z and a direction headed from front to back of the surface of paper is a negative direction of the third direction Z.

In Fig. 4, a lead portion 110 on the front side of the cell stack 10 is described. The explanation in Fig. 4 is also applicable to a lead portion 110 on the rear side of the cell stack 10.

The positive electrode lead group 112G is drawn out toward the front side of the battery cell 100. The positive electrode lead group 112G is folded at a positive electrode-folded portion 112a. Thus, the leading end of the positive electrode lead group 112G is folded in the negative direction of the second direction Y.

The negative electrode lead group 114G is drawn out toward the front side of the battery cell 100. The negative electrode lead group 114G is folded at a negative electrode-folded portion 114a. Thus, the leading end of the negative electrode lead group 114G is folded in the positive direction of the second direction Y.

At least a part of the folded leading end of the positive electrode lead group 112G and at least a part of the folded leading end of the negative electrode lead group 114g are overlapped in the first direction X. In the example illustrated in Fig. 4, the folded leading end of the negative electrode lead group 114G is further ahead of the cell stack 10 than the folded leading end of the positive electrode lead group 112G. Non-limiting examples of lengths between the positive electrode-folded portion 112a and the negative electrode-folded portion 114a of the lead portion 10 include equal to or greater than 0.6 cm and equal to or less than 4.0 cm. Non-limiting examples of lengths of the overlapped portions of the positive electrode lead group 112G and the negative electrode lead group 114G between the positive electrode-folded portion 112a and the negative electrode-folded portion 114a in the second direction Y include equal to or greater than 0.7 cm and equal to or less than 6.4 cm.

The rear surface of the voltage detection portion 310 is joined to the front surface of the folded leading end of the negative electrode lead group 114G via a joining method such as laser welding. The rear surface of the voltage detection portion 310 is preferably formed of the same material as a portion of the lead portion 110 joined to the voltage detection portion 310. For this reason, in the example illustrated in Fig. 4, for example, the rear surface of the voltage detection portion 310 is preferably formed of the same material as the front surface of the folded leading end of the negative electrode lead group 114G.

In Fig. 4, a reference surface R is virtually illustrated by a dotted line for description. The reference surface R is a plane perpendicular to the first direction X. In the example illustrated in Fig. 4, the reference surface R extends between the front surface of the folded leading end of the positive electrode lead group 112G and the rear surface of the folded leading end of the negative electrode lead group 114G.

According to the embodiment, an average of tilts of end surfaces on the front side of a plurality of lead portions 110 relative to the first direction X is 90° or a value relatively close to 90°. Accordingly, relatively high accuracy and precision of the folded shape of the lead portion 110 are granted. In the example illustrated in Fig. 4, the end surface on the front side of the lead portion 110 is the front surface of the folded leading end of the negative electrode lead group 114G.

In the embodiment, an average of tilts of end surfaces on the front side of the plurality of lead portions 110 relative to the first direction X is, for example, equal to or greater than 85.0° and equal to or less than 95.0°. The lower limit of the average is, for example, preferably 86.0°, more preferably 87.5°, and further more preferably 89.0°. The upper limit of the average is, for example, preferably 94.0°, more preferably 92.5°, and further more preferably 91.0°.

In the embodiment, the maximum value among tilts of end surfaces on the front side of the plurality of lead portions 110 relative to the first direction X is, for example, equal to or less than 97.5°, preferably equal to or less than 95.0°, and more preferably equal to or less than 92.5°.

In the embodiment, the minimum value among tilts of end surfaces on the front side of the plurality of lead portions 110 relative to the first direction X is, for example, equal to or greater than 87.5°, preferably equal to or greater than 88.0°, and more preferably equal to or greater than 88.5°.

The average of tilts of end surfaces on the front side of the plurality of lead portions 110 relative to the first direction X is calculated by referring to all lead portions 110 provided on a front side of the cell stack 10, for example. Alternatively, the average may be calculated by referring to a top predetermined number of lead portions 110 with the lowest values of the above tilt among all lead portions 110 provided on the front side of the cell stack 10. The predetermined number is, for example, 50% or more, 60% or more, or 75% of all lead portions 110 provided on the front side of the cell stack 10. The same applies to a standard deviation of tilts of end surfaces on the front side of the plurality of lead portions 110 relative to the first direction X.

In the embodiment, a standard deviation of the positional displacements of the end surfaces on the front side of the plurality of lead portions 110 in the first direction X is zero or relatively small. Accordingly, high accuracy and precision of the folded shape of the lead portion 110 is granted. In the example illustrated in Fig. 4, the end surface on the front side of the lead portion 110 is the front surface of the folded leading end of the negative electrode lead group 114G.

In the embodiment, the standard deviation of the positional displacements of the end surfaces on the front side of the plurality of lead portions 110 in the first direction X is, for example, equal to or less than 2.50 mm, preferably equal to or less than 2.00 mm, and more preferably equal to or less than 1.00 mm.

Non-limiting examples of lengths from the end surface of the lead portion 110 on the front side of the cell stack 10 to the end surface of the lead portion 110 on the rear side of the cell stack 10 in the first direction X include equal to or greater than 35 cm and equal to or less than 80 cm. The variation of the lengths in a plurality of battery cells 100 is, for example, ±2 mm or less, and preferably ±1 mm or less.

The standard deviation of positional displacements of the end surfaces on the front side of the plurality of lead portions 110 in the first direction X is calculated by referring to all lead portions 110 provided on the front side of the cell stack 10, for example. Alternatively, the standard deviation may be calculated by referring to a top predetermined number of lead portions 110 with the lowest values of the above displacement among all lead portions 110 provided in the front side of the cell stack 10. The predetermined number is, for example, 50% or more, 60% or more, or 75% of all lead portions 110 provided on the front side of the cell stack 10.

The standard deviation of the positional displacements of the end surfaces on the front side of the plurality of lead portions 110 in the first direction X is calculated by measuring a displacement of the position of the end surface on the front side of the lead portion 110 relative to the reference surface R in the first direction X, for example. Alternatively, the standard deviation may be calculated by measuring a displacement of the position of the end surface on the front side of the lead portion 110 relative to a plane parallel to the reference surface R in the first direction X. The reference surface R may be optionally provided perpendicularly to the first direction X to extend through a joined portion between the front surface of the folded leading end of the positive electrode lead group 112G and the rear surface of the folded leading end of the negative electrode lead group 114G. Alternatively, the calculation may be conducted by measuring a variation of the lengths from the end surface of the lead portion 110 on the front side of the cell stack 10 to the end surface of the lead portion 110 on the rear side of the cell stack 10 in the first direction X. The length is a length parallel to the X direction. When at least one of the above two end surfaces is tilted relative to the second direction Y as viewed from the third direction Z, the length may be a maximum value of a length from the end surface of the lead portion 110 on the front side of the cell stack 10 to the end surface of the lead portion 110 on the rear side of the cell stack 10 in the first direction X.

In Fig. 4, the positive electrode lead 112 and the negative electrode lead 114 drawn out from two battery cells 100 of the cell group 100G are schematically illustrated to linearly approach a vicinity of the reference surface R. However, the positive electrode lead 112 and the negative electrode lead 114 may be bent along the way.

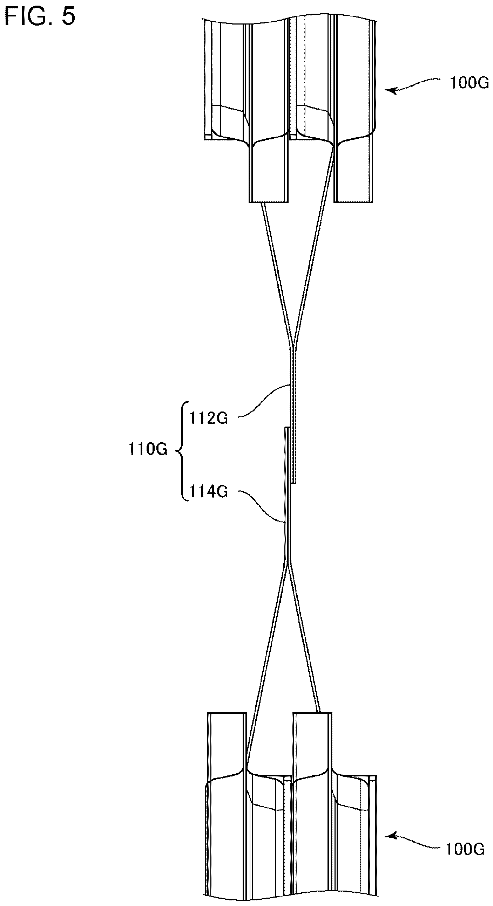

Figs. 5 to 7 each are a diagram illustrating a method of manufacturing the cell stack 10 according to the embodiment. In Figs. 5 to 7, a direction headed from back to front of a surface of paper is a direction headed from the lower side to the upper side in a vertical direction and a direction headed from front to back of the surface of paper is a direction headed from the upper side to the lower side of the vertical direction.

In illustration of Figs. 5 to 7, the cell group 100G provided with the positive electrode lead group 112G of the two cell groups 100G illustrated in each of Figs. 5 to 7 is referred to as a cell group 100G on a positive electrode lead group 112G side as necessary. In illustration of Figs. 5 to 7, the cell group 100G provided with the negative electrode lead group 114G of two cell groups 100G illustrated in each of Figs. 5 to 7 is referred to as a cell group 100G on a negative electrode lead group 114G side as necessary.

The cell stack 10 according to the embodiment is manufactured as below.

First, a plurality of cell groups 100 is formed. In each cell group 100G, a plurality of battery cells 100 is stacked. In the embodiment, each cell group 100G includes two stacked battery cells 100. However, the number of battery cells 100 included in each cell group 100G is not limited to two and may be three or more.

In Figs. 5 to 7, the cell groups 100G are described to be connected in series via the lead portion 110. However, the description in Figs. 5 to 7 is also applicable to a single battery cell 100 and another single battery cell 100 connected in series via the lead portion 110.

Next, a plurality of cell groups 100G is arranged. As illustrated in Fig. 5, at least a part of the positive electrode lead group 112G and at least a part of the negative electrode lead group 114G are overlapped in adjacent cell groups 100G. Then, at least a part of the positive electrode lead group 112G and at least a part of the negative electrode lead group 114G are joined by a joining method such as laser welding between the adjacent cell groups 100G.

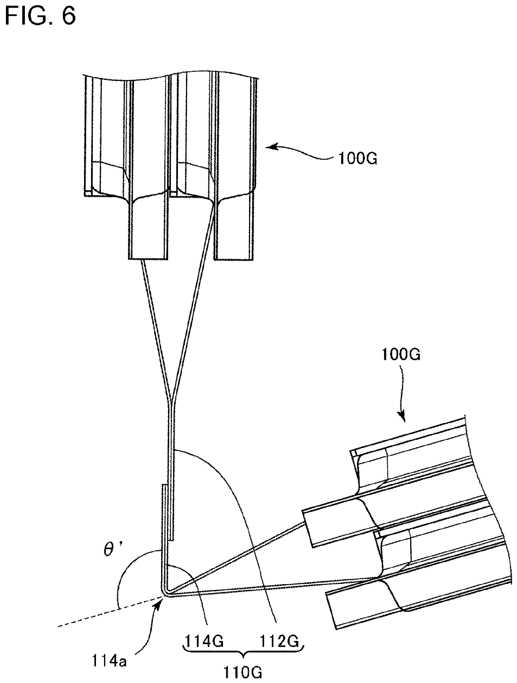

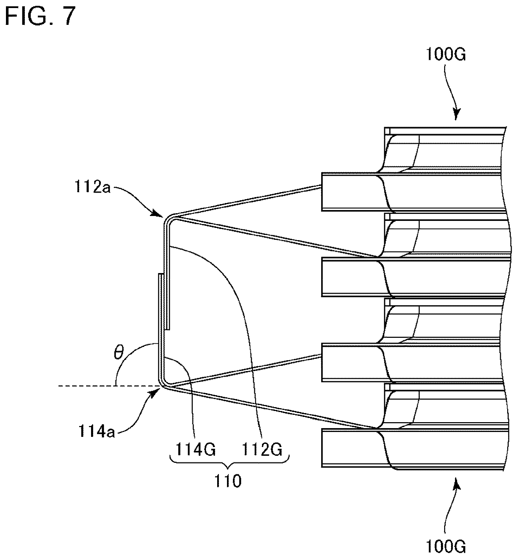

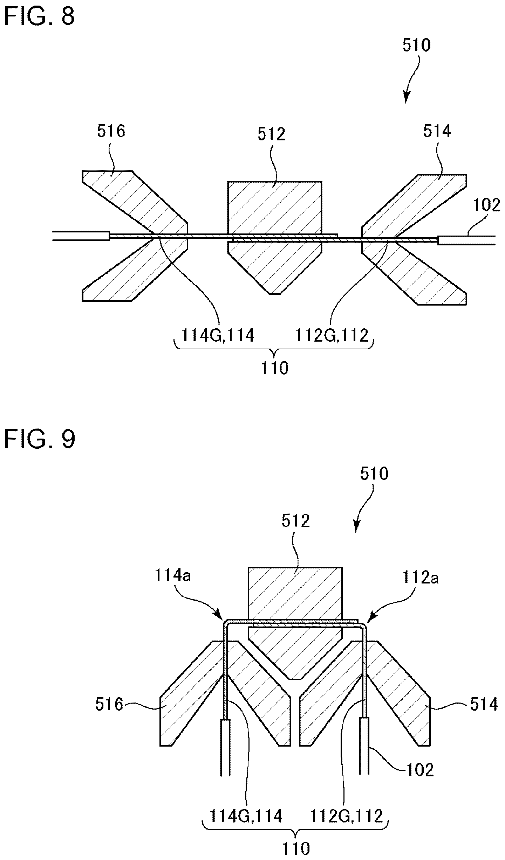

Next, as illustrated in Fig. 6, a part of the lead portion 110 is folded. In the example illustrated in Fig .6, the negative electrode lead group 114G is folded. Next, as illustrated in Fig. 7, another part of the lead portion 110 is folded. In the example illustrated in Fig .7, the positive electrode lead group 112G is folded. Thus, according to the embodiment, the lead portion 110 is folded in two steps when the lead portion 110 is folded back between adjacent cell groups 100G. In the example illustrated in Figs. 6 and 7, the lead portion 110 is folded by using a jig 510 as described later by using Figs. 8 and 9.

Details of folding of the lead portion 110 in Figs. 6 and 7 are described.

First, as illustrated in Fig. 6, the cell group 100G on the negative electrode lead group 114G side is rotated around the negative electrode-folded portion 114a. Thus, the negative electrode lead group 114G is folded at a tentative folding angle θ'. The tentative folding angle θ' is greater than a desired folding angle θ at a time illustrated in Fig. 7 to be described later, considering spring-back of the negative electrode lead group 114G. For this reason, the negative electrode lead group 114G can have the desired bending angle θ illustrated in Fig. 7 even if the tentative bending angle θ' of the negative electrode lead group 114G is decreased due to spring-back after the step illustrated in Fig. 6. The tentative folding angle θ' is greater than 90°, for example. Non-limiting examples of upper limits of the tentative folding angle θ' include 100° or 95°.

When the negative electrode lead group 114G is formed of copper, the spring-back of the negative electrode lead group 114G is likely to be large compared with the negative electrode lead group 114G formed of metal different from copper. In the embodiment, relatively high accuracy and precision of the folded shape of the lead portion 110 can be granted even if the spring-back of the negative electrode lead group 114G is relatively large.

Folding the lead portion 110 at a time without being folded in two steps in folding back the lead portion 110 between adjacent cell groups 110G makes it relatively difficult to previously fold the negative electrode lead group 114G at a folding angle greater than the desired folding angle θ illustrated in Fig. 7 considering the spring-back of the negative electrode lead group 114G. In the embodiment, the negative electrode lead group 114G is easily folded in advance at a folding angle greater than the desired folding angle θ illustrated in Fig. 7 considering the spring-back of the negative electrode lead group 114G, compared with folding the lead portion 110 at a time.

The tentative folding angle θ' illustrated in Fig. 6 and the desired folding angle θ illustrated in Fig. 7 are an angle formed by the lead portion 110 after folding the negative electrode lead group 114G relative to the lead portion 110 illustrated in Fig. 5 before folding the negative electrode lead group 114G.

Next, as illustrated in Fig. 7, while a folding angle of the negative electrode lead group 114G is the desired folding angle θ, the cell group 100G on the positive electrode lead group 112G side is rotated around the positive electrode-folded portion 112a. Thus, the positive electrode lead group 112G is folded to have the cell group 100G on the positive electrode lead group 112G side stacked on the cell group 110G on the negative electrode lead group 114G side. In the example illustrated in Fig. 7, the desired bending angle θ is a right angle.

Among a plurality of cell groups 100G, the lead portion 110 positioned between adjacent cell groups 100G is sequentially folded in accordance with the method described by using Figs. 5 to 7. Thus, a plurality of cell groups 100G are sequentially stacked. Accordingly, the cell stack 10 is manufactured.

In the embodiment, as described above, the lead portion 110 is folded in two steps when the lead portion 110 is folded back between adjacent cell groups 100G. Accordingly, the curvature of the lead portion 110 at the positive electrode-folded portion 112a and the curvature of the lead portion 110 at the negative electrode-folded portion 114a can be easily controlled compared with folding the lead portion 110 at a time when the lead portion 110 is folded back between adjacent cell groups 100G.

The method of manufacturing the cell stack 10 is not limited to the method illustrated in Figs. 5 to 7. For example, the positive electrode lead group 112G is folded, and then the negative electrode lead group 114G may be folded. Specifically, the cell group 100G on the positive electrode lead group 112 side is rotated around the positive electrode-folded portion 112a. Thus, the positive electrode lead group 112G is folded at a tentative folding angle greater than a desired bending angle considering the spring-back of the positive electrode lead group 112G. Next, while the folding angle of the positive electrode lead group 112G is a desired folding angle, the cell group 100G on the negative electrode lead group 114G side is rotated around the negative electrode-folded portion 114a. Thus, the negative electrode lead group 114G is folded to have the cell group 100G on the negative electrode lead group 114G stacked on the cell group 100G on the positive electrode lead group 112G side. In the example illustrated in Figs. 5 to 7, the cell group 100G on the negative electrode lead group 114G side is rotated to form the negative electrode-folded portion 114a. However, the cell group 100G on the positive electrode lead group 112G side may be rotated to form the negative electrode-folded portion 114a. In the above example, the negative electrode lead group 114G or the positive electrode lead group 112G is folded at a tentative folding angle. However, the negative electrode lead group 114G or the positive electrode lead group 112G may be folded at the desired folding angle without folding the negative electrode lead group 114G or the positive electrode lead group 112G at the tentative folding angle.

Figs. 8 and 9 each are a diagram illustrating details of a folding method of the lead portion 110.

In the example illustrated in Figs. 8 and 9, the lead portion 110 is folded by using the jig 510. The jig 510 includes a center clamp 512, a positive electrode clamp 514, and a negative electrode clamp 516.

As illustrated in Fig. 8, the center clamp 512 grasps overlapped portions of the leading end of the positive electrode lead group 112G and the leading end of the negative electrode lead group 114G. In other words, the jig 510 is a grasping portion that grasps at least a part of the lead portion 110.

As illustrated in Fig. 8, the positive electrode clamp 514 grasps the positive electrode lead 112 of the cell group 100G on the positive electrode lead group 112G side. The positive electrode clamp 514 has a substantially V shape. Specifically, a surface of the positive electrode clamp 514 on the exterior member 102 side has a shape covering the leading end of the exterior member 102 of the cell group 100G on the positive electrode lead group 112G side through a gap. Accordingly, the surface of the positive electrode clamp 514 can be unlikely to contact with the exterior member 102. With this, the positive electrode clamp 514 can certainly grasp a portion of the positive electrode lead 112 near the exterior member 102. For example, the positive electrode clamp 514 grasps a position of the positive electrode lead 112 away from the end portion of the exterior member 102 by distance equal to or greater than 1.5 mm and less than 5.0 mm, preferably equal to or greater than 2.0 mm and equal to or less than 3.5 mm. In the example, the positive electrode lead 112 and a sealed portion of the exterior member 102 can be prevented from being damaged compared with when the position where the positive electrode clamp 514 grasps the positive electrode lead 112 is closer to the end portion of the exterior member 102 than the above range. In the above example, precision of folding of the positive electrode lead 112 can be improved compared with when the position where the positive electrode clamp 514 grasps the positive electrode lead 112 is further away from the end portion of the exterior member 102 than the above range. The positive electrode clamp 514 is directly or indirectly attached to a cell fixation portion, not illustrated, that fixes the cell group 100. Therefore, the positive electrode clamp 514 is not rotated relatively to the exterior member 102 of the battery cell 100. With this, the cell group 100G is rotated integrally with the positive electrode group 112G near the exterior member 102 even if the positive electrode clamp 514 is rotated relative to the center clamp 512. For this reason, the positive electrode lead 112 positioned inside the exterior member 102 can be prevented from being curved. Further, a tilt of the end surface of the lead portion 110 relative to the reference surface R after folding the lead portion 110 can be reduced. Furthermore, force applied to a portion of the positive electrode lead 112 nipped by the exterior member 102 can be reduced. This can prevent the exterior member 102 from being damaged and can also prevent a connection portion between a battery element not illustrated and the positive electrode lead 112 from being cut and the like.

The negative electrode clamp 516 includes a structure similar to the positive electrode clamp 514. As illustrated in Fig. 8, the negative electrode clamp 516 grasps the negative electrode lead 114 of the cell group 100G on the negative electrode lead group 114G side. For example, the negative electrode clamp 516 grasps a position of the negative electrode lead 114 away from the end portion of the exterior member 102 by distance equal to or greater than 1.5 mm and less than 5.0 mm, preferably equal to or greater than 2.0 mm and equal to or less than 3.5 mm. In the example, the negative electrode lead 114 and a sealed portion of the exterior member 102 can be prevented from being damaged compared with when the position where the negative electrode clamp 516 grasps the negative electrode lead 114 is closer to the end portion of the exterior member 102 than the above range. In the above example, precision of folding of the negative electrode lead 114 can be improved compared with when the position where the negative electrode clamp 516 grasps the negative electrode lead 114 is further away from the end portion of the exterior member 102 than the above range. The negative electrode clamp 516 is also directly or indirectly attached to a cell fixation portion, not illustrated, that fixes the cell group 100. Therefore, the negative electrode clamp 516 is not rotated relatively to the exterior member 102 of the battery cell 100.

Next, as illustrated in Fig. 9, the negative electrode clamp 516 is rotated relative to the center clamp 512. Thus, the negative electrode lead group 114G is folded around the negative electrode-folded portion 114a. In this case, as described by using Fig. 6, the negative electrode lead group 114G is folded at a tentative folding angle θ' greater than 90° considering the spring-back of the negative electrode lead group 114G.

Next, the positive electrode clamp 514 is rotated relative to the center clamp 512. Thus, the positive electrode lead group 112G is folded around the positive electrode-folded portion 112a.

In folding of the lead portion 110 illustrated in Figs. 8 and 9, a rotation axis of folding of the negative electrode lead group 114G and a rotation axis of folding of the positive electrode lead group 112G are preferably different.

In the example illustrated in Figs. 8 and 9, the cell group 100G on the negative electrode lead group 114G side is rotated to form the negative electrode-folded portion 114a. However, the cell group 100G on the positive electrode lead group 112G side may be rotated to form the positive electrode-folded portion 114a.

### EXAMPLES

Hereinafter, in examples, the cell stack 10 according to the embodiment is specifically exemplified. The cell stack 10 according to the embodiment is not limited to a cell stack 10 to be described according to the examples.

### (Example 1)

A cell stack 10 according to an example 1 was manufactured as described below.

Twenty cell groups 100G were manufactured. Each cell group 100G includes two battery cells 100. Two positive electrode leads 112 are drawn out from one end of an exterior member 102 of each cell group 100G. Two negative electrode leads 114 are drawn out from another end of the exterior member 102 of each cell group 100G. Each positive electrode lead 112 was an aluminum lead. The length of a portion of the positive electrode lead 112 drawn out from the exterior member 102 and the width and the thickness of the leading end thereof were 3 cm, 4.5 cm, and 0.4 mm respectively. Each negative electrode lead 114 was a copper lead. The length of a portion of the negative electrode lead 114 drawn out from the exterior member 102 and the width and the thickness of the leading end thereof were 3 cm, 4.5 cm, and 0.2 mm respectively. The length of each battery cell 100 without the positive electrode lead 112 and the negative electrode lead 114 was 55 cm. The width of each battery cell 100 was 59 cm. The thickness of each battery cell 100 was 0.8 cm.

Next, these cell group 100G were arranged. As illustrated in Fig. 5, a part of a positive electrode lead group 112G and a part of a negative electrode lead group 114 were overlapped between adjacent cell groups 100G. Next, the part of the positive electrode lead group 112G and the part of the negative electrode lead group 114G were joined by laser welding. The length of an overlapped portion between the positive electrode lead group 112G and the negative electrode lead group 114G in a direction headed from one to the other of the adjacent cell groups 100G was 1 cm.

Next, as illustrated in Fig. 6, the cell group 100G on the negative electrode lead group 114G side was rotated around the negative electrode-folded portion 114a. Thus, the negative electrode lead group 114G was folded at 90°. The jig 510 described by using Figs. 8 and 9 was used in folding of the negative electrode lead group 114G. In folding of the negative electrode lead group 114G, the negative electrode clamp 516 grasped a position of the negative electrode lead group 114G away from the end portion of the exterior member 102 by distance 2.0 mm to 3.5 mm.

Next, as illustrated in Fig. 7, while the folding angle θ of the negative electrode lead group 114G was a right angle, the cell group 100G on the positive electrode lead group 112G side was rotated around a positive electrode-folded portion 112a. Thus, the positive electrode lead group 112G was folded to have the cell group 100G on the positive electrode lead group 112G side stacked on the cell group 100G on the negative electrode lead group 114G side. The jig 510 described by using Figs. 8 and 9 was used in folding of the positive electrode lead group 112G. In folding of the positive electrode lead group 112G, the positive electrode clamp 514 grasped a position of the positive electrode lead group 112G away from the end portion of the exterior member 102 by distance 2.0 mm to 3.5 mm. The length of the lead portion 110 between the positive electrode-folded portion 112a and the negative electrode-folded portion 114a from the positive electrode-folded portion 112a to the negative electrode-folded portion 114a was 1 cm.

A lead portion 110 positioned between adjacent cell groups 100G among a plurality of cell groups 100 is sequentially folded in accordance with the above method. Thus, the plurality of cell groups 100G was sequentially stacked. The length from the position of the end surface of the lead portion 110 on the front side of the cell stack 10 to the position of the end surface of the lead portion 110 on the rear side of the cell stack 10 was 550 mm. Thus, the cell stack 10 according to the example 1 was manufactured.

### (Example 2)

A cell stack according to an example 2 was manufactured similarly to the cell stack according to the example 1 except the following point.

In the example 2, as illustrated in Fig. 6, the cell group 100G on the negative electrode lead group 114G side was rotated around the negative electrode-folded portion 114a. Thus, the negative electrode lead group 114G was folded at a tentative folding angle θ' (95°) greater than 90°. The jig 510 described by using Figs. 8 and 9 was used in folding of the negative electrode lead group 114G. In folding of the negative electrode lead group 114G, the negative electrode clamp 516 grasped a position of the negative electrode lead group 114G away from the end portion of the exterior member 102 by distance 2.0 mm to 3.5 mm.

Next, as illustrated in Fig. 7, while the folding angle θ of the negative electrode lead group 114G was a right angle, the cell group 100G on the positive electrode lead group 112G side was rotated around the positive electrode-folded portion 112a. Thus, the positive electrode lead group 112G was folded to have the cell group 100G on the positive electrode lead group 112G side stacked on the cell group 100G on the negative electrode lead group 114G. The jig 510 described by using Figs. 8 and 9 was used in folding of the positive electrode lead group 112G. In folding of the positive electrode lead group 112G, the positive electrode clamp 514 grasped a position of the positive electrode lead group 112G away from the end portion of the exterior member 102 by distance 2.0 mm to 3.5 mm.

The lead portion 110 positioned between adjacent cell groups 100G among a plurality of cell groups 100 is sequentially folded in accordance with the above method. Thus, a plurality of cell groups 100G was sequentially stacked. Thus, the cell stack 10 according to the example 2 was manufactured.

### (Example 3)

An example 3 was similar to the example 2 except that the length from the position of the end surface of the lead portion 110 on the front side of the cell stack 10 to the position of the end surface of the lead portion 110 on the rear side of the cell stack 10 was 350 mm.

### (Example 4)

An example 4 was similar to the example 1 except that the length from the position of the end surface of the lead portion 110 on the front side of the cell stack 10 to the position of the end surface of the lead portion 110 on the rear side of the cell stack 10 was 350 mm and ten cell groups 100G each including twenty battery cells 100 were manufactured.

### (Comparative Example)

A cell stack 10 according to a comparative example was manufactured similarly to the cell stack 10 according to the example 1 except the following.

In the comparative example, after a part of the positive electrode lead group 112G and a part of the negative electrode lead group 114G are joined as illustrated in Fig. 5, the cell group 100G on the positive electrode lead group 112G side was rotated relative to the cell group 100G on the negative electrode lead group 114G side by single folding to have the cell group 100G on the positive electrode lead group 112G side stacked on the cell group 100G on the negative electrode lead group 114G side. In other words, the comparative example did not conduct a folding step of rotating the cell group 100G on the positive electrode lead group 112G side around the negative electrode-folded portion 114a, and a folding step of rotating the cell group 100G on the positive electrode-folded portion 112a side around the positive electrode-folded portion 112a.

Table 1 indicates an average of tilts of end surfaces of a plurality of lead portions 110 relative to a direction perpendicular to a stacked direction of a plurality of cell groups 100G for the example 1 to the example 4 and the comparative example. In Table 1, a numerical value in a column of "Average (°)" indicates an average (unit: °) of the tilt. A numerical value in a column of "Maximum (°)" indicates a maximum value (unit: °) in the tilts. A numerical value in a column of "Minimum (°)" indicates a minimum value (unit: °) in the tilts.

**[Table 1]**

| | Average (°) | Maximum (°) | Minimum (°) |
|---|---|---|---|
| Example 1 | 90.2 | 91.2 | 88.2 |
| Example 2 | 90.5 | 91.0 | 89.9 |
| Example 3 | 90.8 | 92.8 | 88.8 |
| Example 4 | 94.8 | 96.2 | 93.5 |
| Comparative example | 95.3 | 101.0 | 89.0 |

In the example 1 to the example 4 and the comparative example, the average of the above tilts was calculated with reference to all lead portions 110 provided on the front side of the cell stack 10. In calculation of the average, the above tilt relative to a longitudinal direction of the battery cell 100 was measured. The longitudinal direction of the battery cell 100 is a first direction X in the example illustrated in Fig. 4. In the example 1 to the example 4, the average of the above tilts was equal to or greater than 85.0° and equal to or less than 95.0°. In the example 1 to the example 4, the maximum value in the above tilts was equal to or less than 97.5°. In the example 1 to the example 4, the minimum value in the above tilts was equal to or greater than 87.5°.

Table 2 indicates a standard deviation of positional displacements of end surfaces of the plurality of lead portions 110 in a direction perpendicular to the stacked direction of the plurality of cell groups 100G for the example 1 to the example 4 and the comparative example. In Table 2, a numerical value in a column of "Standard deviation (mm)" indicates the standard deviation (unit: mm).

**[Table 2]**

| | Standard deviation (mm) |
|---|---|
| Example 1 | 0.78 |
| Example 2 | 0.17 |
| Example 3 | 0.80 |
| Example 4 | 1. 91 |
| Comparative example | 2.71 |

In the example 1 to the example 4 and the comparative example, the above standard deviation was calculated with reference to all lead portions 110 provided on the front side the cell stack 10. In calculation of the standard deviation, the above displacement in the longitudinal direction of the battery cell 100 was measured. The longitudinal direction of the battery cell 100 is the first direction X in the example illustrated in Fig. 4. In the examples 1 to 4, the above standard deviation was equal to or greater than 0 and equal to or less than 2.50 mm.

From a comparison between the example 1 to the example 4, and the comparative example, the two steps folding of the lead portion 110 in folding back the lead portion 110 between adjacent cell groups 100G could provide high accuracy and precision of the folded shape of the lead portion 110 compared with the single folding of the lead portion 110 in folding back the lead portion 110 between adjacent cell groups 100G.

While an embodiment and examples of the present invention have been described with reference to the drawings, these are merely exemplification of the present invention, and various configurations other than the above configurations are employable.

This application claims priority based on Japanese patent application No. 2022-111633, filed on July 12, 2022, the disclosure of which is incorporated herein in its entirety by reference.

### REFERENCE SIGNS LIST

10 Cell stack, 20 Accommodation body, 30 Voltage detection device, 50 Battery module, 100 Battery cell, 100G Cell group, 102 Exterior member, 110 Lead portion, 112 Positive electrode lead, 112G Positive electrode lead group, 112a Positive electrode-folded portion, 114 Negative electrode lead, 114G Negative electrode lead group, 114a Negative electrode-folded portion, 210 First cover member, 220 Second cover member, 230 Third cover member, 240 Fourth cover member, 250 Fifth cover member, 260 Sixth cover member, 300 Holding body, 310 Voltage detection portion, 320 Voltage detection line, 330 Connector, 510 Jig, 512 Center clamp, 514 Positive electrode clamp, 516 Negative electrode clamp, R Reference surface, X First direction, Y Second direction, Z Third direction

## Claims

1. A battery module comprising:
a plurality of battery cells stacked in a predetermined direction; and
a plurality of lead portions each folded back between at least one battery cell and at least another battery cell, wherein
an average of tilts of end surfaces of the plurality of lead portions relative to a direction perpendicular to the predetermined direction is equal to or greater than 85.0° and equal to or less than 95.0°.

2. A battery module comprising:
a plurality of battery cells stacked in a predetermined direction; and
a plurality of lead portions each folded back between at least one battery cell and at least another battery cell, wherein
a standard deviation of positional displacements of end surfaces of the plurality of lead portions in a direction perpendicular to the predetermined direction is equal to greater than 0 and equal to or less than 2.50 mm.

3. A method of manufacturing a battery module comprising:
folding a part of a lead portion connecting at least one battery cell and at least another battery cell; and
folding another part of the lead portion after folding the part of the lead portion.

4. The method of manufacturing a battery module according to claim 3, wherein
the folding the part of the lead portion includes folding the part of the lead portion at a folding angle greater than a folding angle of the part of the lead portion after folding the another part of the lead portion.
